# EUROPÄISCHE PATENTANMELDUNG

(11) **EP 2 068 410 A1**
(43) Veröffentlichungstag der Anmeldung: **10.06.2009**
(21) Anmeldenummer: 08020880.4
(22) Anmeldetag: 02.12.2008
(51) Int. Cl.: H02G 3/10, H02G 3/12

(54) **Gerätehalterung zur universellen Befestigung von Installationsgeräten und Vorrichtungen an Leitungsführungskanälen**

(30) Priorität: 08.12.2007 DE 202007017167 U
(71) Anmelder: Tehalit GmbH, 67716 Heltersberg (DE)
(72) Erfinder: Mattfeld, Christian, 66919 Schauerberg (DE); Schmitt, Erwin, 67659 Kaiserslautern (DE)
(74) Vertreter: Patentanwälte Möll, Bitterich & Dr. Keller

(57) **Zusammenfassung**

Die vorliegende Erfindung betrifft eine Gerätehalterung zur universellen Befestigung von Installationsgeräten und Vorrichtungen an Leitungsführungskanälen, umfassend ein Oberteil (10), bestehend aus einer Deckplatte (21) und zwei nach unten geneigten Seitenschenkeln (13); ein Unterteil (30), bestehend aus einer Rückenplatte (31) und zwei Stirnseiten (44); Oberteil (10) und Unterteil (30) sitzen aufeinander. Das Oberteil (10) kooperiert über dessen Seitenschenkel (13) mit den Deckelhalteprofilen (12) des Kanalunterteils (20) und wird von diesen gehalten. Das Unterteil (30) stützt sich von unten gegen die Deckelhalteprofile (12) des Kanalunterteils (20) ab und wird von diesen gehalten. Oberteil (10) und Unterteil (30) werden im Montagezustand zusammengehalten und sind entlang des Kanals verschiebbar.

## Beschreibung

Die vorliegende Erfindung betrifft eine Gerätehalterung zur universellen Befestigung von Installationsgeräten und Vorrichtungen an Leitungsführungskanälen.

In vielen Leitungsführungskanälen werden Installationsgeräte, wie Anschlüsse und Steckdosen und andere Vorrichtungen, wie z. B. Lampen, Kameras, Monitore, medizinisches Zubehör eingebaut. Die zuführenden Kabel und Leitungen können das so in den Leitungsführungskanal integrierte Gerät unmittelbar versorgen, und es ist keine externe Befestigung des Gerätes notwendig. Solche Befestigungssysteme sind beispielsweise in der DE 10 2005 022 441, DE 100 57 122, EP 1 701 422 beschrieben. Viele der dort beschriebenen Befestigungsvorrichtungen werden an einer C-Schiene des Kanalunterteils befestigt. Dies hat jedoch den Nachteil, dass der Kanalinnenraum mit der Gerätehalterung oder dem Installationsgerät ausgefüllt wird und die Kabel und Leitungen daran vorbei geführt werden müssen, was unbefriedigend ist. Ferner erfordern diese Befestigungsvorrichtungen einen hohen Montageaufwand, d. h. es sind Werkzeuge und Hilfsmittel erforderlich.

Es ist daher Aufgabe der vorliegenden Erfindung, eine Gerätehalterung für Leitungsführungskanäle bereit zu stellen, die mit einem Handgriff ohne Hilfswerkzeug oder Befestigungsmittel am Kanal montiert werden kann.

Diese Aufgabe wird gelöst durch eine Gerätehalterung gemäß Anspruch 1.

Die erfindungsgemäße Gerätehalterung hat den Vorteil, dass sie für verschiedene an Leitungsführungskanäle anbringbare Installationsgeräte und Vorrichtungen universell verwendbar ist. Die Halterung ist nicht auf ein bestimmtes zu montierendes Installationsgerät festgelegt. Daher können Steckdosen, Lampen, Kameras, Monitore und beliebige andere Vorrichtungen nach demselben erfindungsgemäßen Prinzip und Komponenten an den Leitungsführungskanal montiert werden.

Ein weiterer Vorteil besteht darin, dass die Montage der Gerätehalterung mit einer Hand erfolgen kann, was für die meisten Montagesituationen von Vorteil ist. Erreicht wird dies dadurch, dass das Oberteil und das Unterteil der Gerätehalterung derart miteinander kooperieren, dass die Gerätehalterung zwar entlang des Leitungsführungskanals verschiebbar ist, nicht jedoch in oder aus dem Kanal fallen kann. Das Oberteil und das Unterteil werden in das Kanalunterteil eingesetzt und benötigen für den Halt am Kanal keine Befestigungsmittel. Die Hand des Monteurs ist dadurch frei für andere Aufgaben. Die Montage des Installationsgerätes erfolgt schließlich über Befestigungsöffnungen, die in ihrer Art und ihrer Größe dem Installationsgerät angepasst sind.

In einer ersten Ausführungsform besitzt das Unterteil Klemmprofile, welche mit Halteprofilen des Kanalunterteils derart kooperieren, dass das Unterteil mit dem Leitungsführungskanal haltend verbunden wird. Vorzugsweise sind hierzu seitlich ausgebildete Zungen oder ein durchgehender Steg vorgesehen, die sich von unten gegen die Deckelhalteprofile des Kanalunterteils abstützen. Dadurch wird ein Herausfallen der Gerätehalterung aus dem Kanalunterteil vermieden. Ferner sind am Unterteil seitlich vorstehende Nasen ausgebildet, die mit einer Profilrinne der Deckelhalteprofile des Kanalunterteils kooperieren und dadurch ein Hereinfallen des Unterteils in den Kanal vermeiden.

Das Oberteil besteht vorzugsweise aus zwei seitlich nach unten geneigten Schenkeln, deren Schenkelenden in die Deckelhalteprofile des Kanalunterteils greifen. Das Oberteil und das Unterteil bilden im zusammengesetzten Zustand eine Art Gehäuse mit Hohlraum für die aufzunehmenden Geräte. Die Seitenwände des Gehäuses werden hierbei von den nach unten geneigten Schenkeln des Oberteils an dessen Längsseiten und den zwei nach unten geneigten Stirnseiten des Unterteils gebildet. In einer weiteren Variante kann von unten ein Gehäuseboden an das Unterteil montiert, z. B geklemmt oder verrastet werden.

In einer weiteren Ausführungsform werden das Oberteil und das Unterteil über eine Befestigungszunge frontseitig verrastet. Die Befestigungszunge kann hierbei entweder am Oberteil oder Unterteil ausgebildet sein und eine Klemm- oder Rastverbindung mit dem jeweiligen anderen Teil eingehen.

In einer weiteren Ausführungsform werden das Oberteil und das Unterteil mit einem Magneten zusammengehalten.

In einer weiteren Ausführungsform sind am Unterteil und/oder Oberteil Befestigungsstifte (Clips) ausgebildet, die in entsprechende Öffnungen des jeweiligen anderen Teils greifen und auf diese Weise Oberteil und Unterteil miteinander verbinden und zusammenhalten.

Es ist leicht erkennbar, dass auch noch weitere Möglichkeiten der Verbindung zwischen Oberteil und Unterteil realisierbar sind. Durch das Zusammenhalten von Oberteil und Unterteil wird eine Montageplattform für ein beliebiges zu installierendes Installationsgerät geschaffen, ohne dass ein Festhalten der Gerätehalterung während der Montage des Installationsgerätes erforderlich wäre. Der Monteur hat so beide Hände zur Befestigung des Installationsgerätes frei. Die Kabel und Leitungen können ungehindert durch den Leitungsführungskanal gelegt werden, ohne dass eine Behinderung durch den Geräteeinbau erfolgt.

Die Erfindung wird in den nachfolgenden Zeichnungen näher erläutert. Es zeigen
- Fig. 1: eine Ausführungsform der erfindungsgemäßen Gerätehalterung mit dem Oberteil und Unterteil,
- Fig. 2: die in Fig. 1 gezeigte Gerätehalterung im Montagezustand,
- Fig. 3: eine weitere Ausführungsform der erfindungsgemäßen Gerätehalterung, und
- Fig. 4: die in Fig. 3 gezeigte Gerätehalterung im Montagezustand.

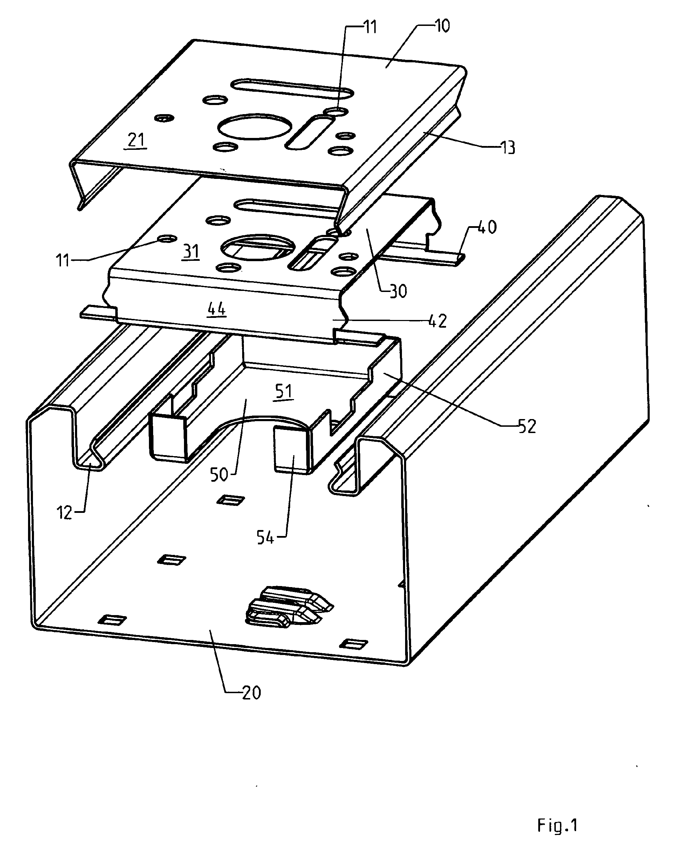

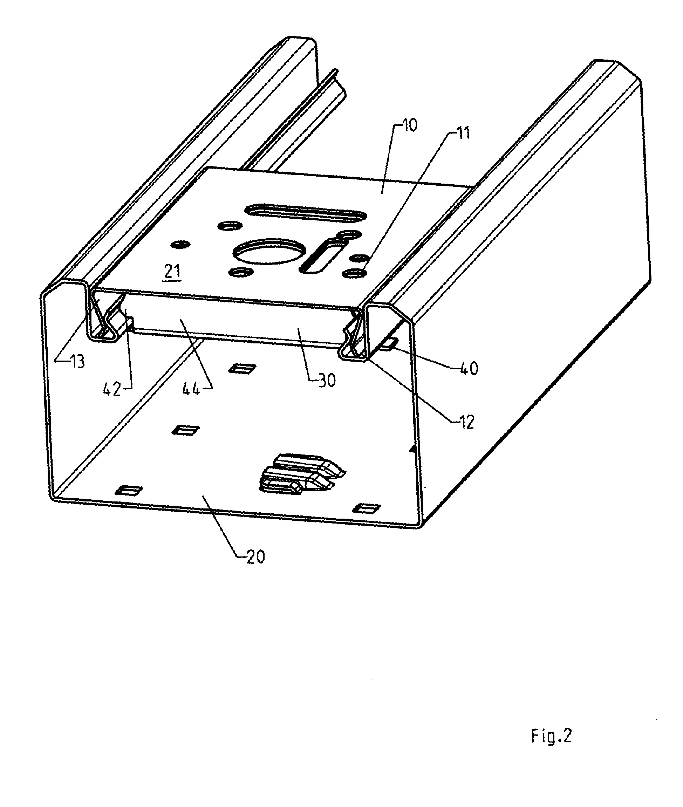

In Fig. 1 erkennt man die einzelnen Komponenten der erfindungsgemäßen Gerätehalterung, bestehend aus Oberteil 10 und Unterteil 30 sowie, in der gezeigten Variante, einen Gehäuseboden 50. Zur Montage wird das Unterteil 30 unter die Deckelhalteprofile 12 des Kanalunterteils 20 geklemmt. Das Unterteil 30 besteht aus einer Rückenplatte 31 und zwei Stirnseiten 44. An den Stirnseiten 44 sind seitlich nach außen tretende Zungen 40 ausgebildet, die sich von unten gegen die Deckelhalteprofile 12 des Kanalunterteils 20 abstützen (in Fig. 2 genauer zu sehen).

Um ein Hereinfallen des Unterteils 30 in den Kanal zu vermeiden, sind seitlich von den Stirnseiten 44 hervorstehende Nasen 42 ausgebildet. Diese Nasen 42 kooperieren mit einer Profilrinne der Deckelhalteprofile 12. Dadurch ist das Unterteil 30 fest mit dem Kanalunterteil 20 verklemmt und kann bei der Montage nicht herausfallen. Das Oberteil 10 wird über die seitlich nach unten geneigten Schenkel 30 in die Deckelhalteprofile 12 des Kanalunterteils 20 eingesetzt. Vorzugsweise sind die Seitenschenkel 13 des Oberteils 10 am Schenkelende leistenförmig nach außen geneigt. An der Deckplatte 21 des Oberteils 10 sowie an der Rückenplatte 31 des Unterteils 30 erkennt man Montageöffnungen 11. Die Montageöffnungen 11 sind je nach Art des zu installierenden Installationsgerätes unterschiedlich ausgeformt.

Im Montagezustand bilden Oberteil 10 und Unterteil 30 eine Art Gehäuse mit Hohlraum. Dieser Hohlraum kann von unten durch einen Gehäuseboden 50 verschlossen werden, um das Installationsgerät zu fixieren und zu schützen. Der Gehäuseboden 50 besteht aus einem Boden 51, Stirnseiten 54 und Seitenwänden 52, die gegebenenfalls Ausnehmungen zur Aufnahme eines Elektroinstallationsgerätes aufweisen können.

In Fig. 2 ist der Montagezustand der Gerätehalterung gezeigt. Die Seitenschenkel 13 des Oberteils 10 stützen sich gegen die Deckelhalteprofile 12 des Kanalunterteils 20 ab. Die Deckelhalteprofile sind vorzugsweise U-förmig ausgestaltet. Der Innenschenkel des Deckelhalteprofils ist Z-förmig ausgestaltet, wobei eine nach innen ausgestaltete Profilrinne gebildet wird, in welche seitlich am Unterteil 30 ausgebildeten Zungen 42 greifen und das Unterteil 30 auf diese Weise mit dem Kanalunterteil 20 verklemmen. Oberteil 10 und Unterteil 30 sind auf diese Weise fest mit dem Kanalunterteil 20 verbunden und können in den Leitungsführungskanal weder hinein- noch herausfallen. Vorteil ist auch, dass die Gerätehalterung entlang des Leitungsführungskanals in die gewünschte Montageposition verschoben werden kann. Das Installationsgerät muss dann nur noch über die Montageöffnungen 11 montiert werden. Erkennbar ist auch, dass der durch das Oberteil 10 und Unterteil 30 gebildete Gehäusehohlraum von der Stirnseite 44 des Unterteils 30 und den Seitenschenkeln 13 des Oberteils 10 gebildet wird.

Durch die erfindungsgemäße Ausgestaltung der Gerätehalterung wird zum einen eine feste Verbindung zwischen Oberteil 10 und Unterteil 30, andererseits eine Verschiebbarkeit in Längsrichtung des Kanals gewährleistet.

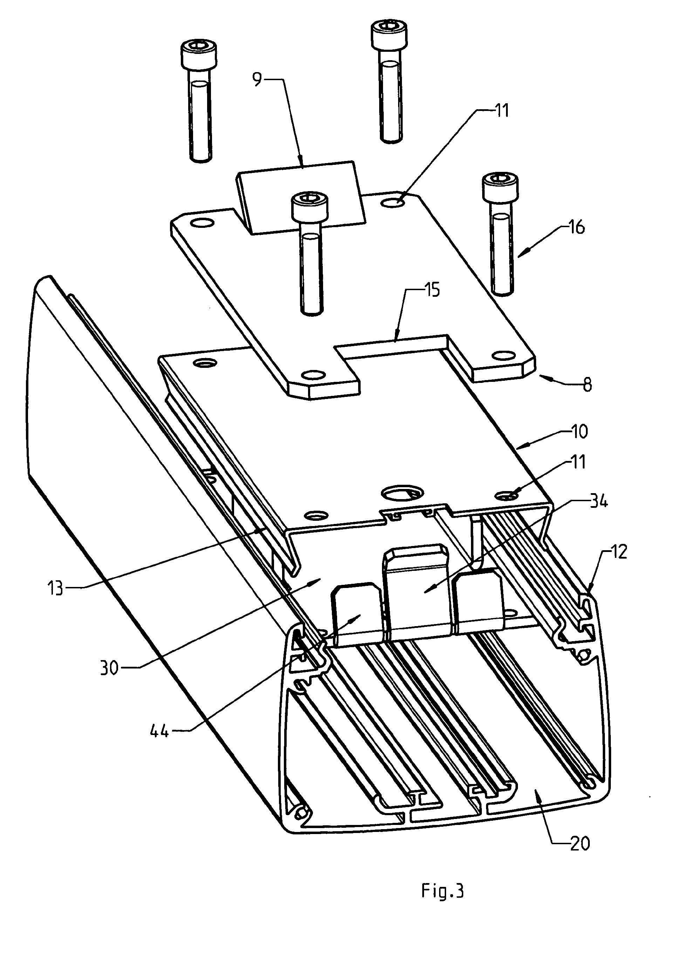

In Fig. 3 ist eine weitere Ausführungsform der erfindungsgemäßen Gerätehalterung gezeigt. Hierbei werden das Oberteil 10 und das Unterteil 30 über eine Befestigungszunge 34 miteinander verklemmt. Die nach oben geneigte Stirnseiten 44 sind als Zungen ausgebildet. Die Befestigungszunge 34 besitzt an ihrem Ende einen abgewinkelten Schenkel, so dass sich der Schenkelrücken gegen die Deckplatte 21 des Oberteils 10 abstützt. Je nach Art des Installationsgerätes kann eine weitere Montageplatte 8 an der erfindungsgemäßen Gerätehalterung angebracht werden. Das eigentliche Installationsgerät kann über herkömmliche Befestigungsmittel 16 mit der Gerätehalterung verbunden werden.

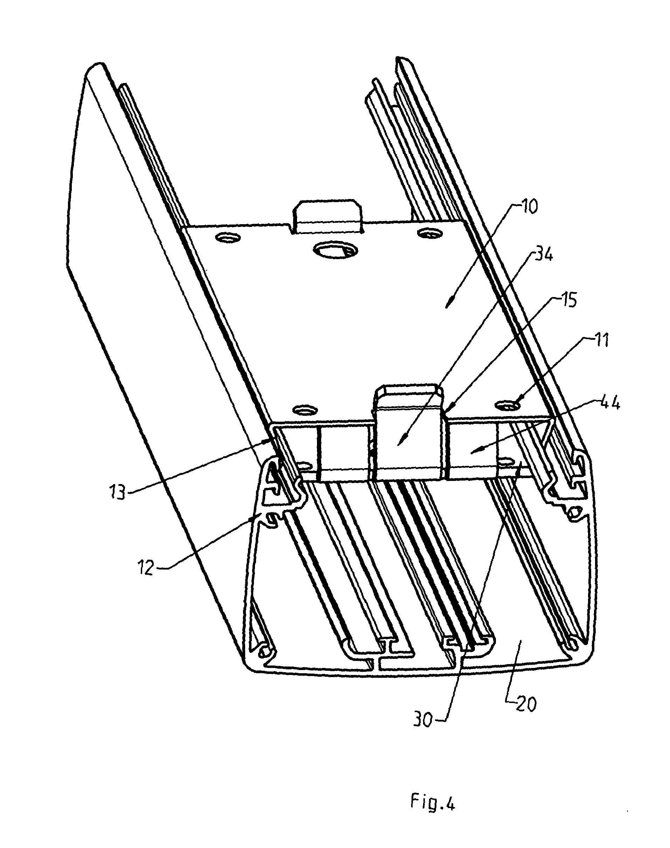

In Fig. 4 ist der Montagezustand gezeigt. Auch hier halten das Oberteil 10 und das Unterteil 30 fest zusammen, ohne dass Befestigungsmittel erforderlich wären. Erkennbar ist auch, wie der Kanalinnenraum frei zur Verlegung von Leitungen bleibt. Auf das Oberteil 10 kann schließlich das Installationsgerät installiert werden, beispielsweise eine Steckdose, Lampe, Monitor, Medizingerät oder ähnliches.

## Patentansprüche

1. Gerätehalterung zur universellen Befestigung von Installationsgeräten und Vorrichtungen an Leitungsführungskanälen, umfassend
- ein Oberteil (10), bestehend aus einer Deckplatte (21) und zwei nach unten geneigten Seitenschenkeln (13),
- ein Unterteil (30), bestehend aus einer Rückenplatte (31) und zwei Stirnseiten (44),
- Oberteil (10) und Unterteil (30) sitzen aufeinander,
**gekennzeichnet durch** die Merkmale:
- das Oberteil (10) kooperiert über dessen Seitenschenkel (13) mit den Deckelhalteprofilen (12) des Kanalunterteils (20) und wird von diesen gehalten,
- das Unterteil (30) stützt sich von unten gegen die Deckelhalteprofile (12) des Kanalunterteils (20) ab und wird von diesen gehalten,
- Oberteil (10) und Unterteil (30) werden im Montagezustand zusammengehalten und sind entlang des Kanals verschiebbar.

2. Gerätehalterung nach Anspruch 1, **gekennzeichnet durch** das Merkmal:
- am Unterteil (30) sind seitlich Zungen (40) ausgebildet, die das Unterteil (30) von unten gegen die Deckelhalteprofile (12) des Kanalunterteils (20) abstützen.

3. Gerätehalterung nach Anspruch 1 oder 2, **gekennzeichnet durch** das Merkmal:
- an der Stirnseite des Unterteils (30) sind Nasen (42) ausgebildet, die mit einer Profilrinne der Deckelhalteprofile (12) des Kanalunterteils (20) kooperieren.

4. Gerätehalterung nach einem der vorhergehenden Ansprüche, **gekennzeichnet durch** das Merkmal:
- statt Zungen (40) ist ein durchgehender Steg am Unterteil (30) ausgebildet.

5. Gerätehalterung nach einem der vorhergehenden Ansprüche, **gekennzeichnet durch** das Merkmal:
- Oberteil (10) und Unterteil (30) bilden ein Gehäuse mit Hohlraum.

6. Gerätehalterung nach Anspruch 5, **gekennzeichnet durch** das Merkmal:
- an das Unterteil (30) wird von unten ein Gehäuseboden (50) montiert.

7. Gerätehalterung nach Anspruch 6, **gekennzeichnet durch** das Merkmal:
- Unterteil (30) und Gehäuseboden (50) werden miteinander verrastet.

8. Gerätehalterung nach Anspruch 6 oder 7, **gekennzeichnet durch** das Merkmal:
- der Gehäuseboden (50) besteht aus Stirnseiten (54) und Seitenwänden (52).

9. Gerätehalterung nach einem der vorhergehenden Ansprüche, **gekennzeichnet durch** das Merkmal:
- an dem Unterteil (30) ist eine Befestigungszunge (34) ausgebildet, die mit dem Oberteil (10) frontseitig verrastet.

10. Gerätehalterung nach einem der vorhergehenden Ansprüche, **gekennzeichnet durch** das Merkmal:
- am Oberteil (10) und/oder Unterteil (30) befinden sich Montageöffnungen (11).

11. Gerätehaltung nach einem der vorhergehenden Ansprüche, **gekennzeichnet durch** das Merkmal:
- Oberteil (10) und Unterteil (30) werden **durch** einen Magneten zusammengehalten.

12. Gerätehalterung nach einem der vorhergehenden Ansprüche, **gekennzeichnet durch** das Merkmal:
- am Oberteil (10) und/oder Unterteil (30) sind Befestigungsstifte ausgebildet, die in die Befestigungsöffnungen des jeweiligen anderen Teils greifen.

13. Leitungsführungskanal, umfassend eine Gerätehalterung nach einem der Ansprüche 1 bis 12.

14. Verfahren zur Befestigung von Installationsgeräten und Vorrichtungen an Leitungsführungskanälen unter Verwendung einer Gerätehalterung nach einem der Ansprüche 1 bis 12.

## Geänderte Patentansprüche

### Geänderte Patentansprüche gemäss Regel 137(2) EPÜ.

**1.** Gerätehalterung zur universellen Befestigung von Installationsgeräten und Vorrichtungen an Leitungsführungskanälen, umfassend
- ein Oberteil (10), bestehend aus einer Deckplatte (21) und zwei nach unten geneigten Seitenschenkeln (13),
- ein Unterteil (30), bestehend aus einer Rückenplatte (31) und zwei Stirnseiten (44),
- Oberteil (10) und Unterteil (30) sitzen aufeinander,
- das Oberteil (10) kooperiert über dessen Seitenschenkel (13) mit den Deckelhalteprofilen (12) des Kanalunterteils (20) und wird von diesen gehalten,
- das Unterteil (30) stützt sich von unten gegen die Deckelhalteprofile (12) des Kanalunterteils (20) ab und wird von diesen gehalten, **gekennzeichnet durch die Merkmale:**
- am Unterteil (30) sind seitlich Zungen (40) ausgebildet, die das Unterteil (30) von unten gegen die Deckelhalteprofile (12) des Kanalunterteils (20) abstützen,
- an der Stirnseite des Unterteils (30) sind zusätzlich Nasen (42) ausgebildet, die mit einer Profilrinne der Deckelhalteprofile (12) des Kanalunterteils (20) kooperieren,
- Oberteil (10) und Unterteil (30) werden im Montagezustand zusammengehalten und sind entlang des Kanals verschiebbar.

**2.** Gerätehalterung nach einem der vorhergehenden Ansprüche, **gekennzeichnet durch** das Merkmal:
- statt Zungen (40) ist ein durchgehender Steg am Unterteil (30) ausgebildet.

**3.** Gerätehalterung nach einem der vorhergehenden Ansprüche, **gekennzeichnet durch** das Merkmal:
- Oberteil (10) und Unterteil (30) bilden ein Gehäuse mit Hohlraum.

**4.** Gerätehalterung nach Anspruch 3, **gekennzeichnet durch** das Merkmal:
- an das Unterteil (30) wird von unten ein Gehäuseboden (50), bestehend aus Stirnseiten (54) und Seitenwänden (52), montiert.

**5.** Gerätehalterung nach Anspruch 4, **gekennzeichnet durch** das Merkmal:
- Unterteil (30) und Gehäuseboden (50) werden miteinander verrastet.

**6.** Gerätehalterung nach einem der vorhergehenden Ansprüche, **gekennzeichnet durch** das Merkmal:
- an dem Unterteil (30) ist an der Stirnseite eine Befestigungszunge (34) ausgebildet, die mit dem Oberteil (10) frontseitig verrastet.

**7.** Gerätehaltung nach einem der vorhergehenden Ansprüche, **gekennzeichnet durch** das Merkmal:
- Oberteil (10) und Unterteil (30) werden **durch** einen Magneten zusammengehalten.

**8.** Gerätehalterung nach einem der vorhergehenden Ansprüche, **gekennzeichnet durch** das Merkmal:
- am Oberteil (10) und/oder Unterteil (30) sind Befestigungsstifte ausgebildet, die in die Befestigungsöffnungen des jeweiligen anderen Teils greifen.

**9.** Leitungsführungskanal, umfassend eine Gerätehalterung nach einem der Ansprüche 1 bis 8.

**10.** Verfahren zur Befestigung von Installationsgeräten und Vorrichtungen an Leitungsführungskanälen unter Verwendung einer Gerätehalterung nach einem der Ansprüche 1 bis 8.
